Europäisches Patentamt

European Patent Office

Office européen des brevets

(19)

(11) Publication number: **0 217 746**

A1

(12) **EUROPEAN PATENT APPLICATION**

(21) Application number: **86810414.2**

(22) Date of filing: **15.09.86**

(51) Int. Cl.⁴: **E 04 G 23/02**

(30) Priority: **18.09.85 GB 8523043**
**30.12.85 GB 8531876**

(43) Date of publication of application:
**08.04.87 Bulletin 87/15**

(84) Designated Contracting States:
**DE GB NL**

(71) Applicant: **HILTI Aktiengesellschaft**

**FL-9494 Schaan(LI)**

(72) Inventor: **Wilshaw, Graham**
**74 Victoria Street**
**Denton Manchester M34 3QZ(GB)**

(74) Representative: **Wildi, Roland**
**Hilti Aktiengesellschaft Patentabteilung**
**FL-9494 Schaan(LI)**

(54) **Wall tie.**

(57) Mechanically-expansible first anchoring means 14, on rod 10 of the tie (which is intended primarily for use in replacing adistintegrated or ineffective pre-existent wall tie in a cavity wall 52, 50) comprises a frustoconical nut 26 which is drawn into expansible sleeve 18 by rotation of the rod 10 using tool 48 applied to end 42 thereof. Over expansion of the sleeve 18 in wall skin 52 is prevented by a neck 44 which permits the rod end 42 to break off when a predetermined torque has been achieved. Second anchoring means 16 of the tie may be mechanically-expansible in the wall skin 50 as shown, but in tis place an adhesively-bondable or like arrangement may be used.

Fig. 1

EP 0 217 746 A1

WALL TIE

This invention concerns wall ties of the kind comprising a rod having first anchoring means, of a mechanically-expansible nature, at or adjacent to one end thereof, for anchoring in one skin of a cavity wall, and second anchoring means (which may be of any suitable form) adjacent its other end for anchoring in the other skin of the wall, the arrangement being such that expansion of the first anchoring means is effected by rotation of the rod.

Wall ties of this sort are used, for example, as replacements for deteriorated or disintegrated wall ties in existing cavity walls, in order to ensure that the two skins of the wall remain tied to one another.

Remedial work of this kind is becoming more and more necessary, especially in relation to building structures erected, for instance, thirty or forty years ago, when use was made extensively of glavanized wire butterfly-type wall ties in the original structure of the building, these wall ties having been prone to rusting away and disintegration, and thereafter resulting in bulging and/or cracking of the walls.

One of the problems in the installation of the replacement wall ties of the kind with which the invention is concerned lies in ensuring that the mechanically-expansible first anchoring means is adequately expanded, and also that it is not over-expanded. Excessive expansion of the anchoring means can result in bursting of the brick or other structural material of which the respective wall skin is constructed, with the result that the tie is not effectively anchored therein and does not perform its intended function.

An object of the present invention is to provide a form of wall tie of the kind above referred to, in which provision is made, in a very simple way, for ensuring that the said anchoring means is expanded effectively to the desired extent but cannot be over-expanded.

With this object in view, the present invention provides a wall tie of the kind comprising a rod having first anchoring means, of a mechanically-expansible nature, at or adjacent to one end thereof, for anchoring in one skin of a cavity wall, and second anchoring means adjacent to its other end fo anchoring in the other skin of the wall, the arrangement being such that expansion of the first anchoring means is effected by rotation of the rod, characterised by the provision, at a location between the second anchoring means and the adjacent said other end of the rod, of a predetermined break-off point so that, upon rotation of said rod by application of force to said other end, the latter will break off upon reaching a predetermined torque, thereby obviating the possibility of over-expansion of the first anchoring means.

Conveniently, the break-off point is provided by a reduced-diameter portion of the rod.

The invention will be described further, by way of example, with reference to the accompanying drawings, in which:-

Fig. 1 is a cross-sectional side elevation illustrating a first practical embodiment of the wall tie of the invention in position in a borehole in a cavity wall prior to expansion of the first anchoring means thereof;

Fig. 2 is a view comparable with Fig. 1, but showing the wall tie with its first anchoring means fully expanded;

Fig. 3 is a cross-sectional side elevation illustrating a second practical embodiment of the wall tie of the invention in position if a resepctive borehole, prior to expansion of the first anchoring means thereof; and

Fig. 4 is a view comparable with Fig. 3, but showing the wall tie with its first anchoring means fully expanded.

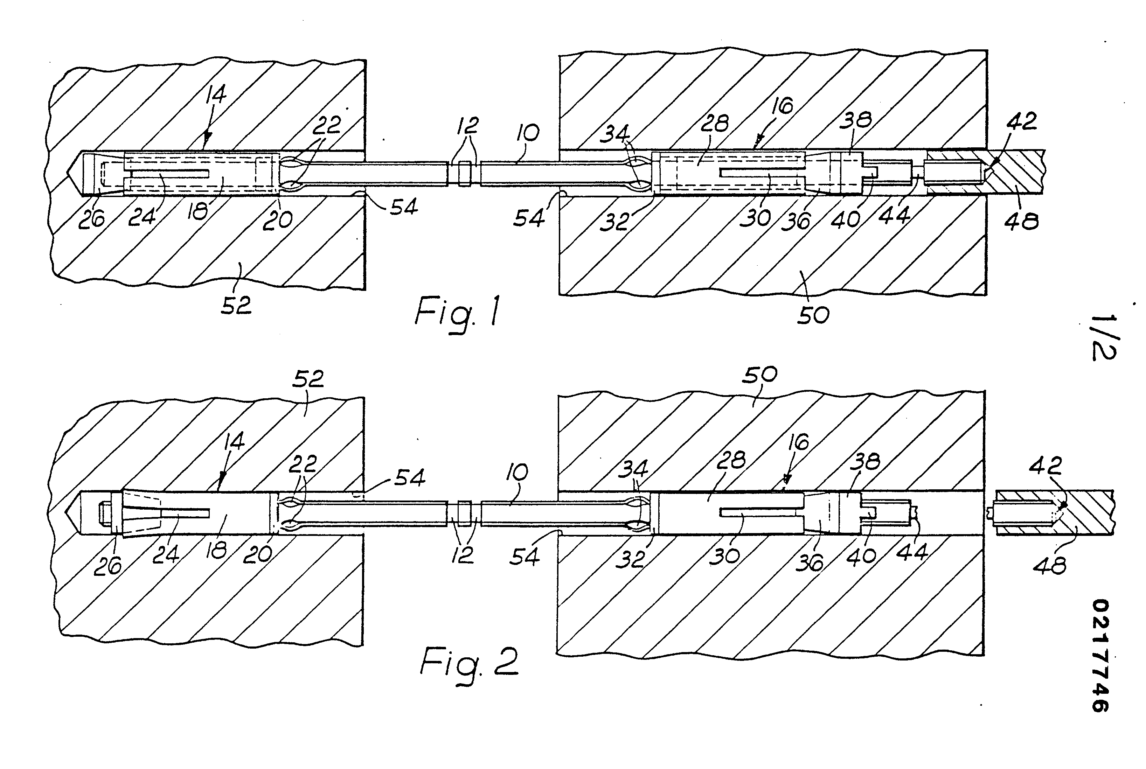

The first embodiment of the wall tie of the invention illustrated in Figs. 1 and 2 comprises an elongate externally-threaded stainless steel rod 10 which has drip grooves 12 approximately midway along its length. At or adjacent one end of the rod 10 is first anchoring means, of a mechanically-expansible nature, as indicated generally by the reference numeral 14, and adjacent the other end of the rod 10 is second anchoring means indicated generally by the reference numeral 16.

The first anchoring means 14 comprises a tubular metal sleeve 18 the inner end of which abuts against a flanged cup washer 20 which in turn abuts against stop 22 formed integrally with the rod 10 simply by cold pinching localised areas of the rod 10 at an appropriate disposition away from the extremity of the rod 10. Slots 24 are formed in the sleeve 18 and extend axially of the sleeve 18 from the end thereof remote from the washer 20 and over about half of the length of the sleeve 18. These slots 24 divide the respective end of the sleeve 18 into a plurality of fingers one of which (not visible) is kinked to protrude radially outwards relative to the rest of the sleeve 18. A mechanical expansion element, in the form of a frusto-conical nut 26, is screwed onto the rod 10 so as to project by its narrow end into the sleeve 18. It will thus be appreciated that upon rotation of the rod 10, whilst the sleeve 18 and nut 26 are retained against rotation, the nut 26 will be drawn into the sleeve 18 to expand the latter.

The second anchoring means 16 is somewhat similar to the first anchoring means 14, but is reversed in its arrangement, comprising a sleeve 28, with slots 30, abutting by its non-slotted end against a cup washer 32 which in turn abuts against stops 34 formed by pinching respective localised areas on the rod 10. A respective frusto-conical expansion element 36, slidable on the rod 10, projects by its narrow end into the slotted end of the sleeve 28 and is abutted by a nut 38 having, on its face averted from the expansion element 36, diametrically-opposed integral shear lugs or tongues 40 whereby the nut 38 can be rotated by means of a complementary tubular tool (not shown).

Formed in the rod 10, at a location between the second anchoring means 16 and the adjacent extremity 42 of the rod 10, is a predetermined breaking point provided by a reduced diameter portion 44 of the rod 10. This portion 44 defines a break-off portion 46 on the rod 10 at the end thereof remote from the first anchoring means 14, which portion 46 serves also to enable torque to be applied to the rod 10 for rotating the latter by means of an internally-threaded expanding tool which screws onto the break-off portion 46 and part of which is indicated at 48 in the drawing.

The manner of operation and use of the wall tie will readily be understood from the foregoing description. Where two skins 50, 52 of a cavity wall are to be tied together (e.g. in the event of disintegration or rotting away of a pre-existent wall tie, not shown) using the tie, firstly a bore 54 is bored into the skins of the wall, this extending fully through the skin 50(which may be the outer skin) and only part way into the skin 52 (which may be the inner skin). The assembled tie is then inserted into the bore 54, whilst united with the expanding tool 48, to the position shown in Fig. 1, in which the first anchoring means 14 is located wholly within the inner skin 52 and the second anchoring means 16 is located wholly within the outer skin 50.

The rod 10 is now rotated by means of the tool 48, whilst the sleeve 18 and the nut 26 are retained against rotation by frictional engagement of the kinked finger of the sleeve 18 with the wall of the bore 54 in the inner skin 52. As a result, the nut 26 is drawn into the sleeve 18, expanding the latter and causing it to become firmly and reliably anchored in the inner skin 52, as shown in Fig. 2. When the sleeve 18 has been sufficiently expanded, the torque applied by means of the tool 48 will increase, and dependent upon the dimensions chosen for the reduced diameter portion or neck 44, having regard to the strength of the material from which the rod 10 is made, in due time the neck 44 will break off as has been shown in Fig. 2. This ensures that the anchoring device 14 will have been sufficiently expanded to assure proper anchorage in the inner wall skin 52, whilst avoiding too much expansion which might, for example, result in destruction or crumbling of the material of the inner skin 52.

The wall tie is, of course, subsequently anchored in the outer wall skin 50 by application of a suitable tool (not shown) to the nut 38 to engage with the integral shear lugs or tongues 40 to rotate the nut 38 and thereby expand the sleeve 28 by forcing the frusto-conical expansion element 36 therein. When a pre-determined torque value is achieved, the lugs or tongues 40 on the nut 38 shear or bend, ensuring that the outer expansion element is set at the correct torque value.

It will thus be appreciated that by the very simple expedient by providing the reduced-diameter portion or neck 44 on the rod 10 near to the end thereof to which the tool 48 is applied, one obtains the advantage that the user of the wall tie is prevented from over-tightening the fist anchoring device 14. One also gets the further advantage that the end portion of the rod 10 is broken off, so that it will not protrude from the bore 54 in the finsihed strucutre, in which the bore can, if desired, be plugged up at the exposed face of the skin 50. Of course, the drip grooves 12 on the rod 10 have the effect of preventing moisture from moving across the rod 10 between the two skins of the wall.

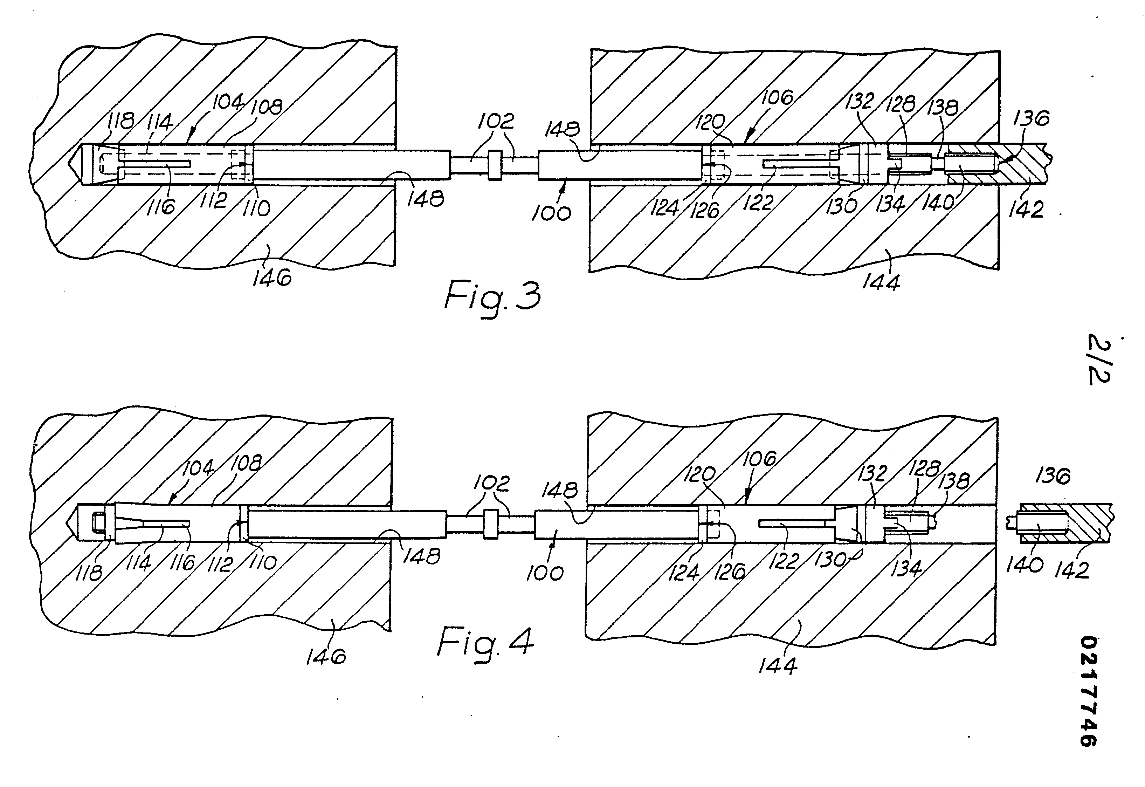

Turning now to Figs. 3 and 4, the second illustrated embodiment of the wall tie of the invention comprises an elongate relatively large diameter stainless steel rod 100 which has drip grooves 102 approximately midway along its length. At or adjacent one end of the rod 100 is first anchoring means, of a mechanically-expansible nature, as indicated generally by the reference numeral 104, and adjacent the other end of the rod 100 is second anchoring means indicated generally by the reference numeral 106.

The first anchoring means 104 comprises a tubular metal sleeve 108 the inner end of which abuts against a flanged cup washer 110 which in turn abuts against a shoulder 112 defined on the rod 100 at the root of a reduced-diameter externally screw-threaded end portion 114 thereof. Slots 116 are formed in the sleeve 108 and extend axially of the sleeve 108 from the end thereof remote from the washer 110 and over about half of the length of the sleeve 108. The slots 116 divide the respective end of the sleeve 108 into a plurality of fingers one of which (not visible) is kinked to protrude radially outwards relative to the rest of the sleeve 108. A mechanical expansion element, in the form of a frusto-conical nut 118, is screwed onto the threaded end portion 114 so as to project by its narrow end into the sleeve 108. It will thus be appreciated that upon rotation of the rod 100, whilst the sleeve 108 and nut 118 are retained against rotation, the nut 118 will be drawn into the sleeve 108 to expand the latter.

The second anchoring means 106 is somewhat similar to

the first anchoring means 104, but is reversed in its arrangement, comprising a sleeve 120, with slots 122, abutting by its non-slotted end against a cup washer 124, which in turn abuts against stop means provided by a shoulder 126 present at the root of a respective reduced diameter externally-threaded end portion 128 of the rod 100. A respective frusto-conical expansion element 130, slidable along the rod end portion 128, projects by its narrow end into the slotted end of the sleeve 120 and is abutted by a nut 132 having, on its face averted from the expansion element 130, diametrically-opposed integral shear lugs or tongues 134 whereby the nut 132 can be rotated by means of a complementary tubular tool (not shown).

Formed in the rod end portion 128, at a location between the second anchoring means 106 and the adjacent extremity 136 of the rod 100, is a predetermined breaking point provided by a reduced diameter portion 138 of the rod 100. This portion 138 defines a break-off portion 140 on the rod 100 at the end thereof remote from the first anchoring means 104, which portion 140 serves also to enable torque to be applied to the rod 100 for rotating the latter by means of an internally-threaded expanding tool which serves onto the break-off portion 140 and part of which is indicated at 142 in the drawing.

The manner of operation and use of this wall tie is similar to that of the embodiment of Figs. 1 and 2. Where two skins 144, 146 of a cavity wall are to be tied together (e.g. in the event of disintegration or rotting away of a pre-existent wall tie, not shown) using the tie, firstly a bore 148 is bored into the skins of the wall, this extending fully through the skin 144 (which may be the outer skin) and only part way into the skin 146 (which may be the inner skin). The assembled tie is then inserted into the bore 148, whilst united with the expanding tool 142, to the position shown in Fig. 3, in which the first anchoring means 104 is located wholly within the inner skin 146 and the second anchoring means 106 is located wholly within the outer skin 144.

The rod 100 is now rotated by means of the tool 142, whilst the sleeve 108 and the nut 118 are retained against rotation by frictional engagement of the kinked finger of the sleeve 108 with the wall of the bore 148 in the inner skin 146. As a result, the nut 118 is drawn into the sleeve 108, expanding the latter and causing it to become firmly and reliably anchored in the inner skin 146, as shown in Fig. 4. When the sleeve 108 has been sufficiently expanded, the torque applied means of the tool 142 will increase, and dependent upon the dimensions chosen for the reduced diameter portion or neck 138, having regard to the strength of the material from which the rod 100 is made, in due time the neck 138 will break off as has been shown in Fig. 4. This ensures that the anchoring device 104 will have been sufficiently expanded to assure proper anchorage in the inner wall skin 146, whilst avoiding too much expansion which might, for example, result in destruction or crumbling of the material of the inner skin 146.

The wall tie is, of course, subsequently anchored in the outer wall skin 144 by application of a suitable tool (not shown) to the nut 132 to engage with the integral shear lugs or tongues 134 to rotate the nut 132 and thereby expand the sleeve 120 by forcing the frusto-conical expansion element 130 therein. When a predetermined torque value is achieved, the lugs or tongues 134 on the but 132 either bend over or shear off, ensuring that the outer expansion element 106 is set at the correct torque value.

It will thus be appreciated that by the very simple expedient by providing the reduced-diameter portion or neck 138 on the rod 100 near to the end thereof to which the tool 142 is applied, one obtains the advantage that the user of the wall tie is prevented from over-tightening the first anchoring device 104. One also gets the further advantage that the end portion of the rod 100 is broken off, so that it will not protrude from the bore 148 in the finished structure, in which the bore 148 can, if desired, be plugged up at the exposed face of the outer skin 144.

Of course, the drip grooves 102 on the rod 100 have the effect of preventing moisture from creeping across the rod 100 between the two skins of the wall.

The invention is not confined to the precise details of the foregoing examples, and variations may be made thereto. Thus, although the second anchoring means 16 and 106 are shown as being mechanically-expansible arrangements, either of them may equally well be adapted for adhesive bonding within the outer skin 50 or 144. Thus, for example, the means 16 or 106 could consist, in the simplest case, of formations on the rod 10 or 100 which can be firmly cemented or anchored within the outer skins 50 or 144. Other variations are possible.

CLAIMS

1. A wall tie of the kind comprising a rod having first anchoring means, of a mechanically-expansible nature at or adjacent to one end thereof, for anchoring in one skin of a cavity wall, and second anchoring means adjacent to its other end for anchoring in the other skin of the wall, the arrangement being such that expansion of the first anchoring means is effected by rotation of the rod, characterised by the provision, at a position between the second anchoring means and the adjacent said other end of the rod, of a predetermined break-off point so that, upon rotation of said rod by application of force to said other end, the latter will break off upon reaching a predetermined torque.

2. A wall tie as claimed in claim 1 wherein the break-off point is provided by a reduced-diameter portion of the rod.

3. A wall tie as claimed in claim 1 or 2 wherein the first anchoring means comprises a tubular sleeve adapted to be expanded in a bore in the respective skin of the cavity wall.

4. A wall tie as claimed in claim 3 wherein the tubular sleeve is slotted along part of its length and rotation of the rod serves to draw a frusto-conical nut into the slotted end of the sleeve.

5. A wall tie as claimed in claim 4 wherein the slotting of the sleeve divides the latter into a plurality of fingers one of which is kinked to engage frictionally with the wall of the bore to retain the sleeve against rotation.

6. A wall tie as claimed in claim 3, 4 or 5 wherein the sleeve abuts by its non-slotted end against stop means formed integrally with the rod.

7. A wall tie as claimed in claim 6 wherein the stop means comprises pinched localised areas of the rod.

8. A wall tie as claimed in claim 6 wherein the stop means comprises a shoulder present at the root of a reduced-diameter externally-threaded end portion of the rod.

9. A wall tie as claimed in any preceding claim wherein the second anchoring means is mechanically-expansible.

10. A wall tie as claimed in claim 9 wherein the second anchoring means comprises a respective frusto-conical expansion element adapted to be forced into a respective expansible sleeve by rotation along the rod, of a nut having integral shear lugs or tongues by which it is adapted to be rotated.

11. A wall tie as claimed in any of claims 1 to 8 wherein the second anchoring means is adapted to be adhesively bonded in the second skin of the wall.

12. A wall tie substantially as hereinbefore described with reference to and as illustrated in Figs. 1 and 2 or in Figs. 3 and 4 of the accompanying drawings.

Fig. 1

Fig. 2

Fig. 3

Fig. 4

2/2

0217746

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | GB-A-2 143 571 (MILLEN)<br><br>* Page 2, lines 18-90; figures 1,2 * | 1,3,4, 8-10 | E 04 G 23/02 |
| Y | FR-A-2 328 876 (ROBERT BOSCH)<br><br>* Page 2, lines 21-37; page 3; figure 1 * | 1,3,4, 8,9 | |
| A | | 2 | |
| Y | FR-A-2 301 723 (COMPAGNIE DES PRODUITS INDUSTRIELS DE L'OUEST)<br>* Page 3, lines 8-34; figures 1-3 * | 1,9,10 | |
| | | | TECHNICAL FIELDS SEARCHED (Int. Cl 4) |
| A | GB-A-2 144 169 (WILSON) | | E 04 G<br>E 04 B |
| A | GB-A-2 152 993 (PYNFORD LTD.) | | |

The present search report has been drawn up for all claims

| Place of search | Date of completion of the search | Examiner |
|---|---|---|
| THE HAGUE | 27-10-1986 | VIJVERMAN W.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding - document

EPO Form 1503 03 82